**Europäisches Patentamt**

**European Patent Office**

**Office européen des brevets**

(11) Veröffentlichungsnummer : **0 098 389**
**B1**

(12) # EUROPÄISCHE PATENTSCHRIFT

(45) Veröffentlichungstag der Patentschrift :
05.03.86

(21) Anmeldenummer : **83105478.8**

(22) Anmeldetag : **03.06.83**

(51) Int. Cl.⁴ : **A 23 L  2/26**, A 23 L   2/32,
B 01 D  19/00, C 02 F   1/20

(54) **Verfahren zur Herstellung alkoholfreier, insbesondere kohlensäurehaltiger Erfrischungsgetränke, sowie Einrichtung zur Durchführung des Verfahrens.**

(30) Priorität : **02.07.82 DE 3224706**

(43) Veröffentlichungstag der Anmeldung :
**18.01.84 Patentblatt 84/03**

(45) Bekanntmachung des Hinweises auf die Patenterteilung : **05.03.86 Patentblatt 86/10**

(84) Benannte Vertragsstaaten :
**AT BE CH DE FR GB IT LI NL SE**

(56) Entgegenhaltungen :
**DE-A- 3 143 459**
**FR-A- 2 488 785**
**US-A- 4 350 503**

(73) Patentinhaber : **Firma Füllpack Dipl. Brau-Ing. D. Wieland**
**Oststrasse 1**
**D-4000 Düsseldorf (DE)**

(72) Erfinder : **Wieland, Dieter**
**Oststrasse 1**
**D-4000 Düsseldorf (DE)**
Erfinder : **Meinert, Hartmut**
**Hünnefeldstrasse 22**
**D-4950 Minden (DE)**
Erfinder : **Pohl, Hans-Ulrich**
**Ruhrallee 75**
**D-4300 Essen (DE)**

(74) Vertreter : **Feder, Heinz, Dr. et al**
**Dominikanerstrasse 37**
**D-4000 Düsseldorf 11 (DE)**

## Beschreibung

Die Erfindung betrifft ein Verfahren zur Herstellung alkoholfreier, insbesondere kohlensäurehaltiger Erfrischungsgetränke, bei dem eine Lösung aus Zucker und getränkespezifischen Aromastoffen und/oder Grundstoffen in entlüftetem Wasser erzeugt wird.

Es ist bekannt, Erfrischungsgetränke in der Weise herzustellen, daß einer vorgegebenen Menge entlüftetem und gegebenenfalls karbonisiertem Wasser eine ebenfalls vorgegebene Menge eines Sirups zugegeben wird, der aus einer konzentrierten Zuckerlösung im Bereich von 45 bis 65° Brix und getränkespezifischen Aromastoffen und/oder Grundstoffen besteht. Die Mischung von Wasser und Sirup erfolgt in bekannten Mischvorrichtungen, die oft als Premixer bezeichnet werden und von denen das gegebenenfalls noch karbonisierte Fertigprodukt an einen Füller zur Abfüllung auf Flaschen weitergeleitet wird.

Dem bekannten Verfahren gemeinsam ist die dem Mischvorgang vorangehende Entlüftung des Wassers, die auf verschiedene Weise vorgenommen werden kann und zu Restsauerstoffgehalten von 1-2 mg/l Wasser führt. Bei den übrigen Verfahrensschritten gibt es Unterschiede. Gelegentlich wird das dem Sirup zuzumischende Wasser in einer dem Endprodukt angemessenen Menge karbonisiert, während in anderen Fällen die vorher aus entlüftetem Wasser und Sirup erzeugte Mischung karbonisiert wird.

Ein allen bekannten Verfahren anhaftender Nachteil besteht darin, daß das Ausgangsprodukt « Sirup » einen starken Luftanteil enthält, der mit den Grundstoffen, beispielsweise verwendetem Staubzucker, oder auch bei der Herstellung des Sirups in Lösebehältern mittels Rührwerken in den Sirup eingebracht wird, wodurch der Restsauerstoffgehalt des Endproduktes wieder angehoben wird, was die Geschmacksstabilität und biologische Haltbarkeit des Endproduktes nachteilig beeinflußt und der Karbonisierung und der Abfüllung des Endproduktes abträglich ist.

Ein weiterer Nachteil der bekannten Verfahren liegt darin, daß für die Siruperzeugung Gefäße bereitgestellt werden müssen, die in ihrer Größe und Zahl abhängig von der Abfüll-Leistung, der Anzahl der zu erzeugenden Getränkesorten und einer erforderlichen Entlüftungsrast von ca. 24 Stunden vor dem Abfüllen sind. Die hierfür notwendigen Einrichtungen erfordern erhebliche Investitionen für das Bauvolumen und die Behälter mit den dazugehörenden Verrohrungen und Reinigungseinrichtungen.

Weiterhin hat sich als nachteilig bei den bekannten Einrichtungen erwiesen, daß als Premixer bekannte Mischvorrichtungen mit ihrer vollen und konstanten Leistung im sogenannten « stop and go »-Betrieb arbeiten, wobei die Steuerung über Sonden innerhalb der Einrichtung und aufgrund der erfaßten Mengenabnahme des Füllers erfolgt. Der Füller selbst ist in seiner Wirkungsweise stark abhängig von der Funktion vor- und nachgeschalteter Einrichtungen, wie sie heute zu einem vollautomatischen Abfüllbetrieb gehören. Diese Verfahrensweise hat zur Folge, daß das mit Hilfe des Premixers ausgeübte Karbonisier- und Mischverfahren nach jedem Halt beim Wiederanfahren von neuem einreguliert und überwacht werden muß. Dies hat Zusammensetzungsschwankungen des Getränkes zur Folge, die sich in den abgefüllten Flaschen durch unterschiedliche Qualitätsanalysenresultate zu erkennen geben.

Weiterhin wirkt sich der « stop and go »-Betrieb leistungsmindernd auf die Getränkeabfüllung aus und setzt die installierten Pumpen starkem Verschleiß aus, und die Schalthäufigkeit begünstigt hohen Energieverbrauch und stärkere Motorbeanspruchung.

Die der Erfindung zugrunde liegende Aufgabe bestand darin, ein Verfahren zur Herstellung alkoholfreier, insbesondere kohlensäurehaltiger Erfrischungsgetränke der eingangs erwähnten Art zu schaffen, mit dessen Hilfe ein wesentlich herabgesetzter Luft- bzw. Sauerstoffgehalt des Endproduktes erreicht werden kann, das ohne Vorratserzeugung des erwähnten getränkespezifischen Sirups auskommt und mit dem es möglich ist, eine außerordentlich hohe Flexibilität bei der kontinuierlichen Herstellung verschiedener Getränkesorten auf Abruf zu erreichen. Weiterhin sollte eine hohe Leistung bei geringem Energieverbrauch und geringem Verschleiß erreicht werden.

Die Lösung dieser Aufgabe erfolgt erfindungsgemäß mit den im kennzeichnenden Teil des Patentanspruchs 1 angegebenen Merkmalen.

Vorteilhafte Ausführungsformen des erfindungsgemäßen Verfahrens sind in den Unteransprüchen 2 bis 8 beschrieben.

Gegenstand der Erfindung ist weiterhin eine Einrichtung zur Durchführung des erfindungsgemäßen Verfahrens mit den Merkmalen der Ansprüche 9 bis 23.

Der Grundgedanke der Erfindung besteht darin, im Gegensatz zur bekannten Verfahrensweise, keinen Sirup, sondern eine Zuckerlösung herzustellen, die als Grundlage für alle infrage kommenden Erfrischungsgetränke unterschiedlicher Art dient, die hergestellt werden sollen. Diese Zuckerlösung mit einer Zuckerkonzentration im Bereich von 7 bis 20° Brix wird dann einem weiteren Entlüftungsverfahren unterworfen, wobei ein außerordentlich niedriger Restsauerstoffgehalt von weniger als 0,1 mg/l erreicht wird.

Die so entlüftete Zuckerlösung dient als Ausgangsprodukt für die Herstellung sämtlicher Erfrischungsgetränke gemäß einem vorgegebenen Programm. Hierzu kann zunächst die unlüftete Zuckerlösung mit entlüftetem Wasser auf eine dem Gesamtgetränkeprogramm oder bestimmten Getränken angepaßte Konzentration eingestellt werden. Die entlüftete Zuckerlösung kann kontinuierlich hergestellt und dann in mehreren Verfahrensschritten auf bestimmte Zuckerkonzentrationen eingestellt, gegebenenfalls karbonisiert, und schließlich in einer letzten Verfahrensstufe kurz vor der Zuführung zur Abfüllvorrichtung mit den getränkespezifischen Aromastoffen, also beispielsweise Grundstoffe, Fruchtsäuren, Zitronensäuren, Essenzen u. dgl. versehen werden.

Die Entlüftung des Wassers und der Zuckerlösung kann nach verschiedenen bekannten oder älteren Verfahren erfolgen. Sie kann beispielsweise mittels Vakuumentgasung durchgeführt werden, bei der die Flüssigkeit in einen geschlossenen Raum eingeleitet wird, in welchem ein vorgegebener, unterhalb des Atmosphärendruckes liegender Gasdruck aufrechterhalten und das aus der Flüssigkeit austretende Gas laufend abgepumpt wird. Die Entlüftung kann auch nach einem Verfahren erfolgen, das im allgemeinen als « Gaswäsche » bezeichnet wird. Bei diesem Verfahren wird der Flüssigkeit in größerer Menge ein anderes Gas, beispielsweise Stickstoff oder Kohlendioxid zugeleitet und die so imprägnierte Flüssigkeit einer Gaswaschsäule zugeleitet, in der ein Teil des gelösten Sauerstoffes zusammen mit dem Waschgas unter Atmosphärendruck oder einem höheren Druck ausgewaschen wird.

Schließlich kann die Entlüftung des Wassers bzw. der Zuckerlösung auch nach einem älteren Verfahren erfolgen, das in der DE-OS 31 43 459 beschrieben ist. Es handelt sich um ein Verfahren zur Austreibung von gelösten Gasen, insbesondere Sauerstoff aus Flüssigkeiten durch Vakuumentgasung, bei dem in der Flüssigkeit vor ihrer Einleitung in den geschlossenen Raum zur Durchführung der Vakuumentgasung eine vorgegebene Menge eines anderen in der Flüssigkeit löslichen Gases, beispielsweise Kohlendioxidgas, oder Stickstoffgas gelöst wird und die derart imprägnierte Flüssigkeit dann der Vakuumentgasung unterworfen wird.

Insbesondere mit dem letzten der geschilderten Verfahren sind außerordentlich niedrige Restgehalte des in der Flüssigkeit gelösten Gases erzielbar.

Das erfindungsgemäße Verfahren läßt sich sehr leicht steuern, und es kann in Abhängigkeit von vorgegebenen Sollwerten eine Menge von entlüfteter Zuckerlösung hergestellt werden, die der Menge des Endproduktes entspricht, das die Abfüllvorrichtung abnimmt.

Die erfindungsgemäße Einrichtung ist so aufgebaut, daß alle Misch- und Verdünnungsvorgänge reglergesteuert durchführbar sind, wobei die Gesamtsteuerung von einem Zentralrechner aus erfolgen kann.

Bei der erfindungsgemäßen Einrichtung kann es vorteilhaft sein, dem die Zuckerlösung erzeugenden ersten Teil der Einrichtung mehrere parallel geschaltete, die nachfolgenden Verfahrensstufen durchführenden Einrichtungsteile zur gleichzeitigen Erzeugung unterschiedlicher Getränkesorten anzuschließen.

Die Einrichtung kann aber auch so aufgebaut sein, daß alle die einzelnen Verfahrensstufen durchführenden Einrichtungsteile hintereinandergeschaltet sind und unterschiedliche Getränkesorten gesteuert von einem zentralen Prozeßrechner zeitlich nacheinander hergestellt werden.

Die mit dem erfindungsgemäßen Verfahren und der erfindungsgemäßen Einrichtung erzielbaren Vorteile sind im folgenden kurz zusammengestellt.

Durch die Verwendung eines Ausgangsproduktes mit außerordentlich niedrigem Sauerstoffgehalt kann unter Ausschluß von Luftberührung bei den einzelnen Verfahrensschritten ein Endprodukt mit sehr niedrigem Sauerstoffgehalt erhalten werden, so daß keine Aromaschädigungen oder Aromaverluste durch Sauerstoff auftreten und das Endprodukt eine große Haltbarkeit besitzt.

Eine Sirupbevorratung ist nicht erforderlich, was unter anderem den Vorteil hat, daß keine Inversion des Zuckers im Sirup auftreten kann, was bei bekannten Verfahren zu Schwierigkeiten in der Bestimmung der Zuckerendkonzentration führt.

Es treten keine Sirupverluste beim Anfahren der Getränkeproduktion, beim Getränkewechsel oder beim Spülen auf, da bei der erfindungsgemäßen Einrichtung keine Sirupleitungen vorhanden zu sein brauchen.

Beim Getränkewechsel müssen im wesentlichen nur die Teile der Einrichtung gespült werden, in denen die getränkespezifischen Aromastoffe vorhanden sind. Dies ist nur ein kleiner Teil der Einrichtung, und die Spülung kann mit entlüftetem Wasser erfolgen, so daß die Gesamteinrichtung auch für das nachfolgende Getränk luftfrei gehalten wird, und ein verlustfreies Anfahren der nächsten Getränkesorte möglich ist.

Die auf die Verarbeitung von Sirup eingestellten Mixer herkömmlicher Bauart brauchen beim erfindungsgemäßen Verfahren nicht verwendet zu werden. Durch die volle Automatisierbarkeit des Verfahrens entfällt auch die bisher oft übliche Produktverantwortung durch die den Füller bedienende Person, die nebenbei auch den Mixer zu bedienen hatte. Es ist vielmehr möglich, die Produktionsvorgänge « Getränkeherstellung » und « Getränkeabfüllung » vollständig voneinander zu trennen, wie dies bisher bereits in Brauereien üblich ist.

Die Produktion kann innerhalb von Minuten von einer Getränkesorte auf die andere umgestellt werden. Eine zusätzliche Kohlendioxidwäsche des Fertigproduktes, die bei bekannten Verfahren häufig notwendig war, entfällt, was zur Folge hat, daß die Verluste an Kohlendioxid und Aromastoffen gering gehalten werden können.

Die Reinigung, Desinfektion und Sterilisierung der Gesamteinrichtung kann auf dem gleichen Wege erfolgen, den die Komponenten bei der Produktherstellung nehmen.

Im folgenden wird anhand der beigefügten Zeichnung ein Ausführungsbeispiel für eine Einrichtung zur Durchführung des erfindungsgemäßen Verfahrens näher erläutert.

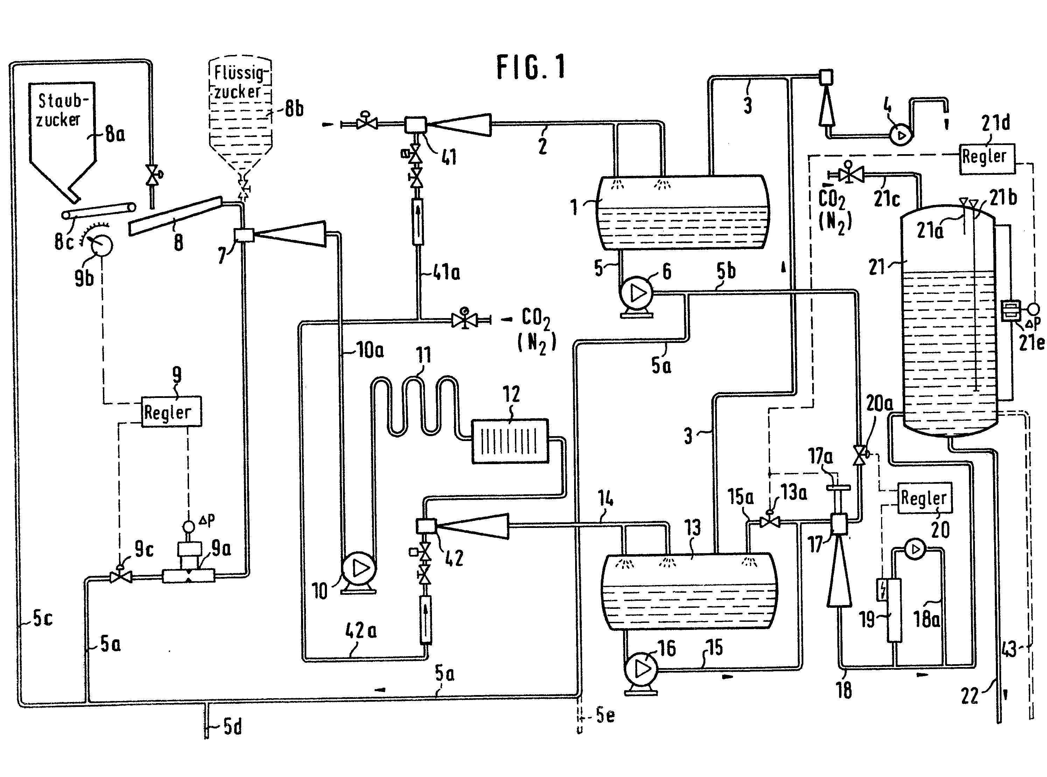

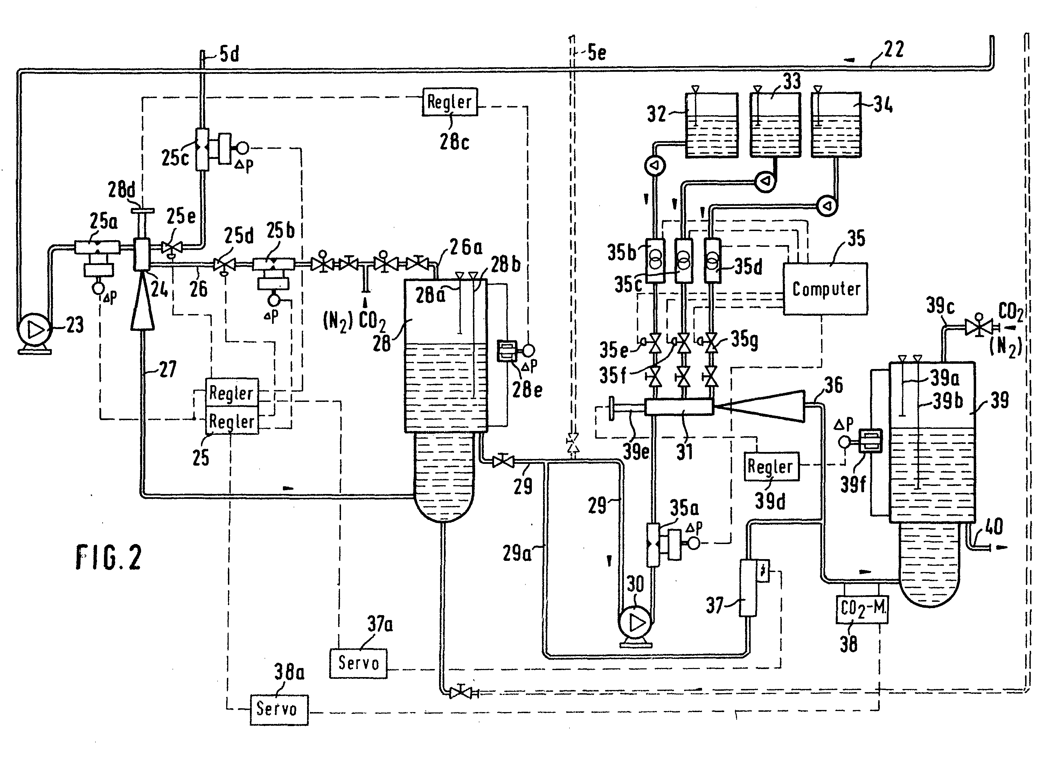

Die Zeichnung zeigt schematisch den Aufbau einer Einrichtung, mit der unterschiedliche Sorten von Erfrischungsgetränken zeitlich nacheinander hergestellt werden können, dabei ist in Fig. 1 ein erster Teil der Einrichtung dargestellt, an den sich ein zweiter in Fig. 2 dargestellter Teil unmittelbar anschließt.

Die Einrichtung besitzt eine erste Vorrichtung zur Vakuumentgasung von Wasser mit einem Entgasungsbehälter 1 der so ausgebildet und angeordnet sein kann, daß seine Ausdehnung in der Breite größer ist als seine Höhe und in dem dadurch eine große Flüssigkeitsoberfläche erreicht wird. Das Oberteil des Entgasungsbehälters 1 ist an eine Untedruckleitung 3 angeschlossen, die mit einer Vakuumpumpe 4 verbunden ist. Weiterhin mündet in das Oberteil des Entgasungsbehälters 1 eine Wasserzuleitung 2 über Sprühvorrichtungen ein. Das Unterteil des Entgasungsbehälters 1 ist über eine Ableitung 5 und eine Flüssigkeitspumpe 6 an zwei Leitungen 5a und 5b angeschlossen, über die das entlüftete Wasser weitergeführt wird. In die Wasserzuleitung 2 ist ein Injektor 41 eingeschaltet, dessen Unterdruckkammer an eine Leitung 41a angeschlossen ist, über die Kohlendioxidgas oder ein anderes inertes Gas, beispielsweise Stickstoff, in einer vorgegebenen, vom Wasserzufluß abhängigen Menge gesteuert zugeführt wird. Durch diese Vorimprägnierung des zugeführten Wasser wird bei der nachfolgenden Vakuumentgasung eine außerordentlich gute Entlüftung des Wassers erreicht.

Die Leitung 5a führt zu einer ersten Mischvorrichtung 7, die als Injektor ausgebildet ist. Das entlüftete Wasser wird der Treibdüse des Injektors zugeführt. Weiterhin kann dem Injektor 7 entweder von einem Vorratsbehälter 8b aus Flüssigzucker oder von einem Vorratsbehälter 8a aus Staubzucker zugeführt werden. Der Staubzucker gelangt zunächst auf eine Transportvorrichtung 8c, wo er über eine an die Leitung 5a angeschlossene Leitung 5c in einer Zuführungsvorrichtung 8 angefeuchtet wird. Durch eine Regelvorrichtung 9 wird die Zufuhr des entlüfteten Wassers über die Leitung 5a zum Injektor 7 gesteuert. Hierzu wird der Durchfluß durch die Leitung 5a mittels einer Durchflußmeßvorrichtung 9a gemessen und die Menge an Staubzucker durch eine Wägevorrichtung 9b bestimmt. Von der von Durchflußmessvorrichtung 9a sowie der Wägevorrichtung 9b her gesteuerten Regelvorrichtung 9 aus erfolgt die Steuerung über ein steuerbares Ventil 9c in der Leitung 5a.

Die im Injektor 7 erzeugte Zuckerlösung wird mittels einer Flüssigkeitspumpe 10 über eine Leitung 10a und ein die Lösung begünstigendes, längeres, mehrfach gekrümmtes Leitungsstück 11 und ein Filter 12 einer Zuführungsleitung 14 zugeführt, welche in das Oberteil des Entgasungsbehälters 13 einer zweiten Vorrichtung zur Vakuumentgasung von Wasser einmündet.

Das mehrfach gekrümmte Leitungsstück 11, in dem die vollständige Auflösung des zugefügten Zuckers stattfinden soll, ist so angeordnet, daß es an allen Stellen ein Gefälle aufweist, damit die Ansammlung von Zuckerresten, beispielsweise in den Krümmungen vermieden wird. Eine solche Anordnung kann beispielsweise dadurch erreicht werden, daß die dargestellten mäanderförmigen Krümmungen in einer abwärts geneigten schiefen Ebene liegen. Selbstverständlich sind hier auch andere Anordnungen, wie beispielsweise die Führung der Leitung auf einer Schraubenlinie möglich. Ebenso kann die Zuckerlösung an dieser Stelle durch einen aufrechtstehenden Zylinder geleitet werden, der in seinem Inneren den Flüssigkeitsstrom umlenkende Schikanen aufweist, die ebenfalls so angeordnet sind, daß auf ihnen keine Ablagerung von Zuckerresten stattfinden kann.

In die Zuführungsleitung 14 zum Entgasungsbehälter 13 ist in ähnlicher Weise wie bei der Zuführungsleitung 2 zum Entgasungsbehälter 1 ein Injektor 42 eingeschaltet, dessen Unterdruckkammer an eine Zuführungsleitung 42a angeschlossen ist, über die Kohlendioxidgas oder Stickstoffgas zugeführt werden kann. Auf diese Weise wird auch die zu entgasende Zuckerlösung einer Vorimprägnierung unterworfen und es werden bei der folgenden Vakuumentgasung außerordentlich gute Entlüftungswerte erreicht.

Das Oberteil des Entgasungsbehälters 13 ist weiterhin an die Unterdruckleitung 3 angeschlossen. Die Ableitung der im Entgasungsbehälter 13 entlüfteten Zuckerlösung erfolgt mittels einer Flüssigkeitspumpe 16 über eine Ableitung 15, die zur Treibdüse eines weiteren Injektors 17 führt, dessen Unterdruckkammer über die Leitung 5b und ein ansteuerbares Ventil 20a entlüftetes Wasser zugeführt werden kann. Im Injektor 17 erfolgt eine erste Einstellung der entlüfteten Zuckerlösung auf einen gewünschten Konzentrationsgrad. Hierzu wird in einem Bypass 18a zur Ableitung 18 des Injektors 17 mittels einer Meßvorrichtung 19 die Dichte der vom Injektor 17 abgeführten Zuckerlösung gemessen, und mittels eines Reglers 20 das die Zufuhr an entlüftetem Wasser zum Injektor 17 steuernde Ventil 20a angesteuert. Die Ableitung 18 des Injektors 17 mündet in einen Vorratsbehälter 21. Der Füllstand des Vorratsbehälters 21 wird durch eine Differenzdruckmeßvorrichtung 21e kontinuierlich überwacht, wobei über eine an die Meßvorrichtung 21e angeschlossene Regelvorrichtung 21d in Abhängigkeit von einem vorgegebenen Wert die Zufuhr steuerbar ist, und zwar in der Weise, daß die Regelvorrichtung 21d eine Zuführvorrichtung 17a an der Treibdüse des Injektors 17 und gleichzeitig in entgegengesetzter Richtung ein steuerbares Ventil 13a ansteuert, das in einer Rückführungsleitung 15a von der Leitung 15 in das Oberteil des Entgasungsbehälters 13 angeordnet ist. Auf diese Weise ist, insbesondere wenn auch der Zufluß zu den Entgasungsbehältern 1 und 13 in nicht dargestellter Weise gesteuert ist, eine gute Steuerung der Zufuhr von entlüfteter Zuckerlösung zum Vorratsbehälter 21 möglich. Im Vorratsbehälter 21 sind außerdem Meßgeräte 21a für den maximalen und 21b für den minimalen Flüssigkeitsstand angeordnet. Diese Meßgeräte sind erforderlich, um die Pumpe 16 ein- oder auszuschalten, da die Regelventile nur im Leistungsbereich von 10-100 % eingestellt werden. Die Einrichtung ist auch von Hand steuerbar.

Im Vorratsbehälter 21 kann die entlüftete Zuckerlösung über die Leitung 21c unter einer Schutzgasatmosphäre von Kohlendioxid, Stickstoff oder einem anderen inerten Gas, gehalten werden.

Die Weiterleitung der entlüfteten Zuckerlösung vom Vorratsbehälter 21 aus erfolgt über eine Ableitung 22 zu den in Fig. 2 dargestellten Teilen der Einrichtung.

Die im folgenden beschriebenen Teile der Einrichtung können mehrfach vorhanden sein und in einzelnen Zweigen einander parallel geschaltet sein.

Die Ableitung 22 mündet, geführt über eine Flüssigkeitspumpe 23 und eine Durchflußmeßeinrichtung 25a, in die Treibdüse eines weiteren Injektors 24, der als weitere Mischvorrichtung dient, und zwar zur weiteren Einstellung des Konzentrationsgrades der entlüfteten Zuckerlösung sowie zu einer eventuellen Karbonisierung der Zuckerlösung bei der Herstellung kohlensäurehaltiger Getränke.

Hierzu wird dem Injektor 24 über eine Leitung 5d, die an die Leitung 5a angeschlossen ist, sowie über eine Durchflußmeßeinrichtung 25c und ein ansteuerbares Ventil 25e entlüftetes Wasser zugeführt. Weiterhin kann über eine Leitung 26 von einer Kohlendioxidgasquelle aus über eine Durchflußmeßvorrichtung 25b und ein steuerbares Ventil 25d Kohlendioxidgas zugeführt werden. Die Steuerung der steuerbaren Ventile 25d und 25e erfolgt von einem Regler 25 aus in der weiter unten beschriebenen Weise.

Die Ableitung 27 des Injektors 24 mündet in einen weiteren Vorratsbehälter 28 ein. Der Füllstand dieses Vorratsbehälters 28 wird kontinuierlich durch eine Druckmessvorrichtung 28c überwacht, die an einen Regler 28c, der eine Zuführungseinrichtung 28d am Injektor 24 ansteuert, angeschlossen ist. Das Oberteil des Vorratsbehälters 28 ist an die Zuleitung 26a für Kohlendioxidgas angeschlossen. Bei der Herstellung von nicht kohlesäurehaltigen Getränken kann der Vorratsbehälter 28 auch an eine Leitung zur Zuführung eines anderen Schutzgases, beispielsweise Stickstoff, angeschlossen sein.

Auch im Vorratsbehälter 28 sind Meßgeräte 28a bzw. 28b für den maximalen und minimalen Flüssigkeitsstand angeordnet, die die Pumpe 23 ein- bzw. ausschalten. Auch hier ist eine Handsteuerung möglich.

Die Ableitung 29 vom Vorratsbehälter 28 ist über eine weitere Flüssigkeitspumpe 30 und eine Durchflußmeßvorrichtung 35a an die Treibdüse eines weiteren Injektors 31 angeschlossen, der die Mischvorrichtung darstellt, mit der die getränkespezifischen Aromastoffe und/oder Grundstoffe der entlüfteten Zuckerlösung zugeführt werden.

Die getränkespezifischen Aromastoffe und-/oder Grundstoffe sind in Vorratsgefäßen 32, 33 und 34 enthalten. Es kann auch eine größere Anzahl derartiger Vorratsgefäße an den Injektor 31 angeschlossen sein. Der Anschluß der Vorratsgefäße 32, 33 und 34 an die Unterdruckkammer des Injektors 31 erfolgt über Durchflußmeßvorrichtungen 35b, 35c, 35d und ansteuerbare Ventile 35e, 35f und 35d. Die Ansteuerung der Ventile 35e, 35f und 35g erfolgt von einem Prozeßrechner 35 aus, der die Steuerung nach einem vorgegebenen Programm vornimmt. Dem Prozeßrechner 35 wird von der Durchflußmeßvorrichtung 35a aus ein weiteres Steuersignal zugeführt. An die Ableitung 36 des Injektors 31 ist eine Bypassleitung 29a mit einer Vorrichtung 37 zur Messung der Dichte angeschlossen, die von der Ableitung 29 des Vorratsbehälters 28 ausgeht. Eine Vorrichtung 38 an der Ableitung 36 dient zur Messung des Kohlendioxidgehaltes im Endprodukt. Die von den Vorrichtungen 37 und 38 gelieferten Signale werden über Servokreise 37a bzw. 38a dem Regler 25 zugeführt, der eine entsprechende Ansteuerung des entlüfteten Wassers und des Kohlendioxidgases über die Ventile 25e und 25d vornimmt.

Das Endprodukt wird über die Leitung 36 einem letzten Vorratsbehälter 39 zugeführt, dessen Füllstand durch eine Differenzdruckmessvorrichtung 39f überwacht und mittels einer Regelvorrichtung 39d geregelt wird, welche eine ansteuerbare Zuführungsvorrichtung 39e an der Treibdüse des Injektors 31 ansteuert. Auch bei diesem Vorratsbehälter wird die maximale und minimale Füllmenge zusätzlich durch Meßgeräte 39a und 39b überwacht.

Über eine Ableitung 40 erfolgt die Weiterleitung des Endproduktes zur Abfüllvorrichtung.

Zur Reinigung der die getränkespezifischen Aromastoffe und/oder Grundstoffe enthaltenden Teile der Einrichtung bei einem Getränkewechsel dient eine Leitung 5e, welche an die Leitung 5a angeschlossen ist und durch die entlüftetes Wasser der Ableitung 29 vom Vorratsbehälter 28 zugeführt werden kann.

Das Unterteil des Vorratsbehälters 28 ist über eine Leitung 43 und ein Ventil 43a mit dem Vorratsbehälter 21 verbunden. Wenn nun bei einem Getränkewechsel die im Vorratsbehälter 28 enthaltene Zuckerlösung zur Herstellung des neuen Getränkes nicht brauchbar ist, wird zunächst unter dem Druck des über die Leitung 26 zugeführten Gases die in der Leitung 27 enthaltene Zuckerlösung in den Vorratsbehälter 28 gedrückt. Dann wird ebenfalls unter Gaszufuhr über die Leitung 26a und Öffnung des Ventils 43a der Inhalt des Vorratsbehälters 28 in den Vorratsbehälter 21 zurückgedrückt. Es kann dann der Vorratsbehälter 28 mit einer neuen, auf eine vorgegebene Konzentration eingestellten Zuckerlösung gefüllt werden.

Die Funktionsweise der beschriebenen Einrichtung ist folgende :

In der ersten Mischvorrichtung, also dem Injektor 7, wird aus Staubzucker oder Flüssigzucker, stammend aus den Vorratsbehältern 8a und 8b und dem von der ersten Vorrichtung zur Vakuumentgasung von Wasser, nämlich dem Entgasungsbehälter 1 stammenden entlüftetem Wasser eine Zuckerlösung vorgegebener Konzentration, die an der Regelvorrichtung 9 eingestellt werden kann, erzeugt und der zweiten Vorrichtung zur Vakuumentgasung von Wasser, nämlich dem Entgasungsbehälter 13 zugeführt, in dem die Entlüftung der Zuckerlösung stattfindet.

Im Injektor 17 findet dann unter Zuführung von entlüftetem Wasser aus dem Entgasungsbehälter 1 eine erste Einstellung des Zuckergehaltes der Lösung durch Verdünnung statt, die an der Regelvorrichtung 20 einstellbar ist.

Die im Vorratsbehälter 21 gesammelte voreingestellte entlüftete Zuckerlösung wird im Injektor 24 einer der spezifischen Getränkesorte entsprechende Endeinstellung unterworfen und gegebenenfalls karbonisiert, wobei die Steuerung von der Regelvorrichtung 25 in Abhängigkeit von den am Endprodukt über die Vorrichtungen 37 und 38 gemessenen Daten (Dichte, Kohlensäuregehalt) durchgeführt wird.

Die im Vorratsbehälter 28 in ihrer Konzentration endeingestellte und gegebenenfalls karbonisierte entlüftete Zuckerlösung wird im Injektor 31 mit den getränkespezifischen Aromastoffen und/oder Grundstoffen aus den Vorratsgefäßen 32, 33 und 34 vermischt und dann über den Vorratsbehälter 39 und die Leitung 40 der Abfüllvorrichtung zugeführt.

Wie aus der Zeichnung unmittelbar abzulesen, ist durch Einschaltung der verschiedenen Vorratsbehälter 21, 28 und 39 sowie die Regelvorrichtungen 9, 20, 21d, 25, 28c und 39d eine äußerst flexible Anpassung der jeweils erzeugten Mengen der Zwischenprodukte an die Menge des abzunehmenden Endproduktes möglich. Die stufenweise Einstellung der Konzentrationen des Zuckergehaltes der entlüfteten Zuckerlösung sowie die Überprüfung des Endproduktes auf Zuckerkonzentration und Kohlensäuregehalt und die damit verbundene « Feedback »-Regelung sowie die rechnergesteuerte Zugabe der getränkespezifischen Aromastoffe und/oder Grundstoffe machen eine äußerst genaue Einstellung des Endproduktes auf bestimmte Gehalte der zugefügten Stoffe und eine Synchronisation der Erzeugung der Zuckerlösung sowie der Zugabe der Aromastoffe und/oder Grundstoffe in Abhängigkeit von der Abnahme an der Füllvorrichtung möglich.

Weiterhin wird durch die Anordnung der Vorratsbehälter 21, 28 und 39 sowie die mit diesen Vorratsbehältern verbundenen Regelkreise zur Überwachung des Füllstandes eine gute Entkoppelung der einzelnen Teile der Einrichtung erreicht, so daß Störungen, die in einem Teil der Einrichtung, beispielsweise am Anfang oder am Ende auftreten, keine Rückwirkungen auf die anderen Teile der Einrichtung zu haben brauchen.

Gemäß einer in den Zeichnungen nicht dargestellten Variante der beschriebenen Ausführungsform der erfindungsgemäßen Einrichtung kann es vorteilhaft sein, die Vorratsbehälter 32 bis 34 über die ansteuerbaren Ventile 35e bis 35g nicht direkt an die Unterdruckkammer des Injektors 31 anzuschließen, sondern über einen Vermischer. Es wird dann in diesem Vermischer ein vorgegebenes Gemisch der zuzusetzenden getränkespezifischen Aromastoffe und/oder Grundstoffe erzeugt und dieses Gemisch dem Injektor 31 zugeführt. Bei dieser Ausführungsform ist in besonders einfacher Weise ein Übergang auf Handsteuerung der Einrichtung möglich.

## Patentansprüche

1. Verfahren zur Herstellung alkoholfreier, insbesondere kohlensäurehaltiger Erfrischungsgetränke, bei dem eine Lösung aus Zucker und getränkespezifischen Aromastoffen und/oder Grundstoffen in entlüftetem Wasser erzeugt wird, dadurch gekennzeichnet, daß zunächst durch Auflösen von Staubzucker oder Flüssigzucker in entlüftetem Wasser mit einem Sauerstoffgehalt unterhalb 0,15 mg/l eine Zuckerlösung erzeugt wird, deren Konzentration mindestens der zur Herstellung des Endproduktes benötigten Höchstkonzentration entspricht und diese Zuckerlösung in einem weiteren Entlüftungsverfahren auf einen Sauerstoffgehalt von weniger als 0,1 mg/l eingestellt wird und der derart entlüfteten Zuckerlösung die getränkespezifischen Aromastoffe und/oder Grundstoffe zugefügt werden.

2. Verfahren nach Anspruch 1, dadurch gekennzeichnet, daß die Entlüftung des Wassers und/oder der Zuckerlösung mittels Vakuumentgasung erfolgt.

3. Verfahren nach Anspruch 2, dadurch gekennzeichnet, daß in dem Wasser und/oder der Zuckerlösung vor der Vakuumentgasung eine vorgegebene Menge eines anderen in der Flüssigkeit löslichen Gases gelöst und die derart imprägnierte Flüssigkeit der Vakuumentgasung unterworfen wird.

4. Verfahren nach Anspruch 1, dadurch gekennzeichnet, daß die Entlüftung des Wasser und/oder der Zuckerlösung durch Gaswäsche erfolgt.

5. Verfahren nach einem der Ansprüche 1 bis 4, dadurch gekennzeichnet, daß die entlüftete Zuckerlösung vor dem Hinzufügen der getränkespezifischen Aromastoffe und/oder Grundstoffe mit entlüftetem Wasser auf eine vorgegebene Konzentration eingestellt wird.

6. Verfahren nach einem der Ansprüche 1 bis 5, dadurch gekennzeichnet, daß die entlüftete Zuckerlösung vor dem Hinzufügen der getränkespezifischen Aromastoffe und/oder Grundstoffe karbonisiert und auf einen vorgegebenen Kohlensäuregehalt eingestellt wird.

7. Verfahren nach Anspruch 5 oder 6, dadurch gekennzeichnet, daß nach dem Hinzufügen der getränkespezifischen Aromastoffe und/oder Grundstoffe die Dichte und/oder der Kohlendioxidgehalt des Endproduktes gemessen und die Zufuhr von entlüftetem Wasser und/oder Kohlendioxidgas zur entlüf-teten Zuckerlösung in Abhängigkeit von vorgegebenen Sollwerten gesteuert wird.

8. Verfahren nach einem der Ansprüche 1 bis 7, zur gleichzeitigen oder wechselweisen Herstellung unterschiedlicher alkoholfreier Erfrischungsgetränke, dadurch gekennzeichnet, daß eine entlüftete Zuckerlösung bereitgestellt wird, deren Konzentration mindestens so hoch ist, wie die höchste der in den unterschiedlichen Erfrischungsgetränken benötigten Sollkonzentrationen und vorgegebenen Anteilen dieser Zuckerlösung jeweils die zur Erzeugung eines bestimmten Endproduktes erforderlichen Mengen an weiterem entlüfteten Wasser und/oder Kohlendioxidgas und getränkespezifischen Aromastoffen und/oder Grundstoffe nach einem vorgegebenen Programm gesteuert zugegeben werden.

9. Einrichtung zur Durchführung des Verfahrens nach einem der Ansprüche 1 bis 4, dadurch gekennzeichnet, daß eine erste Vorrichtung (1) zur Entgasung von Wasser an eine erste Mischvorrichtung (7) zur Zugabe von Staub-zucker und/oder Flüssigzucker angeschlossen ist, und der ersten Mischvorrichtung (7) eine zweite Vorrichtung (13) zur Entgasung von Wasser, sowie eine zweite Mischvorrichtung (31) zur Zugabe getränkespezifischer Aromastoffe und/oder Grundstoffe nachgeschaltet ist.

10. Einrichtung nach Anspruch 9 zur Durchführung des Verfahrens nach den Ansprüchen 5 oder 6, dadurch gekennzeichnet, daß zwischen die zweite Vorrichtung (13) zur Entgasung von Wasser und die zweite Mischvorrichtung (31) mindestens eine dritte Mischvorrichtung (17, 24) zur Zugabe von entlüftetem Wasser und/oder Kohlendioxidgas eingeschaltet ist.

11. Einrichtung nach Anspruch 10, dadurch gekennzeichnet, daß zwischen die zweite Vorrichtung (13) zur Entgasung von Wasser und die dritte Mischvorrichtung (24) und/oder zwischen die dritte Mischvorrichtung (24) und die zweite Mischvorrichtung (31) Vorratsbehälter (21, 28) eingeschaltet sind.

12. Einrichtung nach einem der Ansprüche 9 bis 11, dadurch gekennzeichnet, daß der zweiten Mischvorrichtung (31) ein Vorratsbehälter (39) nachgeschaltet ist.

13. Einrichtung nach einem der Ansprüche 9 bis 12, dadurch gekennzeichnet, daß als Mischvorrichtungen (7, 17, 24, 31) Injektoren dienen, deren Treibdüsen jeweils entlüftetes Wasser bzw. entlüftete Zuckerlösung und deren Unterdruckkammern die zuzugebenden Stoffe zugeführt werden.

14. Einrichtung nach einem der Ansprüche 10 bis 13, dadurch gekennzeichnet, daß der zweiten Mischvorrichtung (31) und/oder der dritten Mischvorrichtung (17, 24) Vorrichtungen (19, 37, 38) zur Bestimmung der Dichte und/oder des Kohlendioxidgehaltes des Fertigproduktes bzw. der Zuckerlösung nachgeschaltet sind, die mit einem Regelkreis (20, 25) zur Steuerung der Zufuhr von entlüfteter Zuckerlösung und/oder entlüftetem Wasser und/oder Kohlendioxidgas über die dritte Mischvorrichtung (17, 24) verbunden sind.

15. Einrichtung nach Anspruch 14, dadurch gekennzeichnet, daß der Regelkreis (25) an einen « Feedback-Servoregelkreis » angeschlossen ist zum Vergleich der Kohlendioxid-Soll- und Istwerte.

16. Einrichtung nach einem der Ansprüche 9 bis 14, dadurch gekennzeichnet, daß an die zweite Mischvorrichtung (31) mehrere Vorratsbehälter (32, 33, 34) für getränkespezifische Aromastoffe und/oder Grundstoffe über steuerbare Zuführvorrichtungen (35e, 35f, 35g) angeschlossen sind und die Zuführvorrichtungen von einem zentralen Prozeßrechner (35) aus angesteuert werden.

17. Einrichtung nach einem der Ansprüche 9 bis 16, dadurch gekennzeichnet, daß zwischen der ersten Mischvorrichtung (7) und der zweiten Vorrichtung (13) zur Entgasung von Wasser Filter (12) eingeschaltet sind.

18. Einrichtung nach einem der Ansprüche 9 bis 17, dadurch gekennzeichnet, daß die Vorrichtungen zur Entgasung von Wasser Vorrichtungen zur Vakuumentgasung sind mit einem Entgasungsbehälter (1, 13) in den an der Oberseite eine an eine Vakuumpumpe (4) angeschlossene Unterdruckleitung (3) einmündet und der einen Einlaß (2, 14) und einen Auslaß (5, 15) für die zu entgasende Flüssigkeit aufweist.

19. Einrichtung nach Anspruch 18, dadurch gekennzeichnet, daß vor dem Einlaß des Entgasungsbehälters (1, 13) ein Injektor (41, 42) angeordnet ist, dessen Treibdüse an die Flüssigkeitszuleitung (2, 10a) und dessen Unterdruckkammer an eine Gasquelle (41a, 42a) angeschlossen ist.

20. Einrichtung nach Anspruch 18 oder 19, dadurch gekennzeichnet, daß jede Vorrichtung zur Vakuumentgasung von Wasser einen Entgasungsbehälter (1, 13) aufweist, der so ausgebildet und angeordnet ist, daß seine Ausdehnung in der Breite größer ist als seine Höhe.

21. Einrichtung nach einem der Ansprüche 9 bis 20, dadurch gekennzeichnet, daß die zweite Mischvorrichtung (31) unmittelbar an den Auslaß (5) der ersten Vorrichtung (1) zur Entgasung von Wasser anschließbar ist.

22. Einrichtung nach einem der Ansprüche 9 bis 21, dadurch gekennzeichnet, daß zwischen der ersten Mischvorrichtung (7) und der zweiten Vorrichtung (13) zur Entgasung von Wasser ein mehrfach gekrümmtes Leitungsstück (11) so angeordnet ist, daß es an allen Stellen ein Gefälle aufweist.

23. Einrichtung nach einem der Ansprüche 16 bis 22, dadurch gekennzeichnet, daß die Vorratsbehälter (32, 33, 34) für getränkespezifische Aromastoffe und/oder Grundstoffe über die steuerbaren Zuführvorrichtungen (35e, 35f, 35g) an einen Vormischer angeschlossen sind, der an die zweite Mischvorrichtung (31) angeschlossen ist.

## Claims

1. A method of producing alcohol-free, in particular carbonic acid-containing refreshing beverages, in which method a solution is prepared containing sugar and beverage-specific aromatic substances and/or basic substances in deaerated water, characterized in that, firstly, a sugar solution is prepared by solving powdered or liquid sugar in deaerated water having an oxigen content of less than 0,15 mg/l, the concentration of said sugar solution corresponding to at least the maximum concentration necessary for the production of the final product, that, in a further deaerating step, said sugar solution is adjusted to an oxigen content of less than 0,1 mg/l, and that the beverage-specific aromatic substances and/or basic substances are added to the sugar solution which has been deaerated in this way.

2. A method as claimed in claim 1, characterized in that the deaeration of the water and/or the sugar solution is achieved by means of vacuum degassing.

3. A method as claimed in claim 1, characterized in that, prior to the vacuum degassing step, a predetermined amount of another gas which is soluble in the liquid, is solved in the water and/or in the sugar solution, and that the thus impregnated liquid is subjected to vacuum degassing.

4. A method as claimed in claim 1, characterized in that the deaeration of the water and/or the sugar solution is achieved by gas washing.

5. A method as claimed in any of claims 1 to 4, characterized in that, prior to the addition of the beverage-specific in that, prior to the addition of the beverage-specific aromatic substances and/or basic substances, the deaerated sugar solution is adjusted to a predetermined concentration by means of deaerated water.

6. A method as claimed in any of claims 1 to 5, characterized in that, prior to the addition of the beverage-specific aromatic substances and/or the basic substances, the deaerated sugar solution is carbonated and adjusted to a predetermined content of carbonic acid.

7. A method as claimed in claim 5 or 6, characterized in that, after the addition of the beverage-specific aromatic substances and/or the basic substances, the density and/or the carbon dioxide content of the final product is measured and the supply of deaerated water and/or carbon dioxide gas to the deaerated sugar solution is controlled in dependency of predetermined nominal values.

8. A method as claimed in any of claims 1 to 7, for simultaneously or alternatingly producing different alcohol-free refreshing beverages, characterized in that a deaerated sugar solution is provided the concentration of which is at least as high as the maximum nominal concentrations required in the different refreshing beverages, and that, to predetermined amounts of said sugar solution, the amounts of additional deaerated water and/or carbon dioxide gas and beverage-specific aromatic substances and/or basic substances required for the production of a specific final product, are each added in controlled manner in accordance with a predetermined program.

9. An apparatus for carrying out the method as claimed in any of claims 1 to 4, characterized in that a first device (1) for degassing water is connected to a first mixing device (7) for adding powdered and/or liquid sugar, and that said first mixing device (7) is followed by a second device (13) for degassing water and by a second mixing device (31) for adding beverage-specific aromatic substances and/or basic substances.

10. An apparatus as claimed in claim 9 for carrying out the method as claimed in claim 5 or 6, characterized in that, between the second device (13) for degassing water and the second mixing device (31), at least a third mixing device (17, 24) is arranged for adding deaerated water and/or carbon dioxide gas.

11. An apparatus as claimed in claim 10, characterized in that storage vessels (21, 28) are arranged between the second device (13) for degassing water and the third mixing device (24), and/or between said third mixing device (24) and the second mixing device (31).

12. An apparatus as claimed in any of claims 9 to 11, characterized in that the second mixing device is followed by a storage vessel (39).

13. An apparatus as claimed in any of claims 9 to 12, characterized in that injectors serve as mixing devices (7, 17, 24, 31) the driving nozzles of which injectors are supplied with deaerated water or deaerated sugar solution, respectively, and the vacuum chambers of which injectors are supplied with the substances to be added.

14. An apparatus as claimed in any of claims 10 to 13, characterized in that the second mixing device (31) and/or the third mixing device (24) are followed by devices (19, 37, 38) for determining the density and/or the carbon dioxide content of the final product or the sugar solution, respectively, which devices are connected with a control circuit (20, 25) for regulating the supply of deaerated sugar solution and/or deaerated water and/or carbon dioxide gas through the third mixing device (17, 24).

15. An apparatus as claimed in claim 14, characterized in that the control circuit (25) is connected to a « feedback servo control circuit » for comparing the nominal and actual values of the carbon dioxide.

16. An apparatus as claimed in any of claims 9 to 14, characterized in that several storage vessels (32, 33, 34) for beverage-specific aromatic substances and/or basic substances are connected to the second mixing device (31) through controllable supply means (35e, 35f, 35g), and that said supply means are controlled by a central processor (35).

17. An apparatus as claimed in any of claims 9 to 16, characterized in that filters (12) are arranged between the first mixing device (7) and the second device (13) for degassing water.

18. An apparatus a claimed in any of claims 9 to 17, characterized in that the devices for degassing water are devices for vacuum degassing vessel (1, 13) into which, at the upper side thereof, opens a vacuum conduit (3) connected to a vacuum pump (4), said vessel comprising an inlet (2, 14) and an outlet (5, 15) for the liquid to be degassed.

19. An apparatus as claimed in claim 18, characterized in that, in front of the inlet of the degassing vessel (1, 13), an injector (41, 42) is arranged the driving nozzle of which is connected to the liquid supply (2, 10a), and the vacuum chamber of which is connected to a gas source (41a, 42a).

20. An apparatus as claimed in claim 18 or 19, characterized in that each device for vacuum-degassing comprises a degassing vessel (1, 13) shaped and arranged so that its extension width is larger than its height.

21. An apparatus as claimed in any of claims 9 to 20, characterized in that the second mixing device (31) is adapted to be directly connected to the outlet (5) of the first device (1) for degassing water.

22. An apparatus as claimed in any of claims 9 to 21, characterized in that, between the first mixing device (7) and the second device (13) for degassing water, a multiply bent conduit section (11) is arranged in such a way that it slopes downwardly in all of its portions.

23. An apparatus as claimed in any of claims 16 to 22, characterized in that the storage vessels (32, 33, 34) for beverage-specific aromatic substances and/or basic substances are connected, through the controllable supply means (35e, 35f, 35g), to a pre-mixing device connected to the second mixing device (31).

**Revendications**

1. Procédé de préparation de boissons rafraîchissantes sans alcool contenant, en particulier, de l'acide carbonique, procédé dans lequel on forme une solution de sucre et de substances de base et/ou de substances aromatiques spécifiques aux boissons dans de l'eau désaérée, caractérisé en ce que, par dissolution de sucre en poudre ou de sucre liquide dans de l'eau désaérée ayant une teneur en oxygène inférieure à 0,15 mg/l, on forme tout d'abord une solution de sucre dont la concentration correspond au moins à la concentration maximale nécessaire pour la préparation du produit final et, au cours d'un procédé complémentaire de désaérage, on règle cette solution de sucre à une teneur en oxygène de moins de 0,1 mg/l et, à la solution de sucre ainsi désaérée, on ajoute les substances de base et/ou les substances aromatiques spécifiques à la boisson.

2. Procédé selon la revendication 1, caractérisé en ce que le désaérage de l'eau et/ou de la solution de sucre a lieu au moyen d'un dégazage sous vide.

3. Procédé selon la revendication 2, caractérisé en ce que, avant le dégazage sous vide, on dissout, dans l'eau et/ou la solution de sucre, une quantité prédéterminée d'un autre gaz soluble dans le liquide et on soumet le liquide ainsi imprégné au dégazage sous vide.

4. Procédé selon la revendication 1, caractérisé en ce que le désaérage de l'eau et/ou de la solution de sucre a lieu par lavage au gaz.

5. Procédé selon une des revendications 1 à 4, caractérisé en ce que, avant l'addition des substances de base et/ou des substances aromatiques spécifiques à la boisson, on règle la solution de sucre désaérée à une concentration prédéterminée avec de l'eau désaérée.

6. Procédé selon une des revendications 1 à 5, caractérisé en ce que, avant l'addition des substances de base et/ou des substances aromatiques spécifiques à la boisson, on soumet la solution de sucre désaérée à une carbonatation et on la règle à une teneur prédéterminée en acide carbonique.

7. Procédé selon la revendication 5 ou 6, caractérisé en ce que, après l'addition des substances de base et/ou des substances aromatiques spécifiques à la boisson, on mesure la densité et/ou la teneur en anhydride carbonique du produit final et on règle l'alimentation d'eau désaérée et/ou d'anhydride carbonique gazeux à la solution de sucre désaérée en fonction de valeurs de consigne prédéterminées.

8. Procédé selon une des revendications 1 à 7 pour la préparation simultanée ou alternée de différentes boissons rafraîchissantes sans alcool, caractérisé en ce qu'on prépare une solution de sucre désaérée dont la concentration est au moins aussi élevée que les concentrations maximales de consigne nécessaires dans les différentes boissons rafraîchissantes et, à des quantités prédéterminées de cette solution de sucre, on ajoute chaque fois de manière réglée selon un programme prédéterminé, les quantités d'eau supplémentaire désaérée et/ou d'anhydride carbonique gazeux et de substances de base et/ou de substances aromatiques spécifiques aux boissons, qui sont nécessaires pour l'obtention d'un produit final déterminé.

9. Appareil pour la réalisation du procédé selon une des revendications 1 à 4, caractérisé en ce qu'un premier dispositif (1) destiné au dégazage de l'eau est raccordé à un premier dispositif de mélange (7) prévu pour l'addition de sucre en poudre et/ou de sucre liquide tandis que, à la suite du premier dispositif de mélange (7), sont montés un deuxième dispositif (13) pour le dégazage de l'eau, ainsi qu'un deuxième dispositif de mélange (31) destiné à ajouter les substances de base et/ou les substances aromatiques spécifiques aux boissons.

10. Appareil selon la revendication 9 pour la réalisation du procédé selon les revendications 5 ou 6, caractérisé en ce que, entre le deuxième dispositif (13) prévu pour le dégazage de l'eau et le deuxième dispositif de mélange (31), on installe au moins un troisième dispositif de mélange (17, 24) destiné à l'addition de l'eau désaérée et/ou de l'anhydride carbonique gazeux.

11. Appareil selon la revendication 10, caractérisé en ce que, entre le deuxième dispositif (13) pour le dégazage de l'eau et le troisième dispositif de mélange (24) et/ou entre le troisième dispositif de mélange (24) et le deuxième dispositif de mélange (24) et le deuxième dispositif de mélange (31), on installe des réservoirs (21, 28).

12. Appareil selon une des revendications 9 à 11, caractérisé en ce que, à la suite du deuxième dispositif de mélange (31), est monté un réservoir (39).

13. Appareil selon une des revendications 9 à 12, caractérisé en ce que, comme dispositifs de mélange (7, 17, 24, 31), on utilise des injecteurs aux tuyères de projection desquels est chaque fois acheminée de l'eau désaérée ou une solution de sucre désaérée et aux chambres à dépression desquels, sont acheminées les substances à ajouter.

14. Appareil selon une des revendications 10 à 13, caractérisé en ce que, à la suite du deuxième dispositif de mélange (31) et/ou du troisième dispositif de mélange (17, 24), on installe des dispositifs (19, 37, 38) en vue de déterminer la densité et/ou la teneur en anhydride carbonique du produit final ou de la solution de sucre, ces dispositifs étant raccordés à un circuit de régulation (20, 25) en vue de régler l'alimentation de solution de sucre désaérée et/ou d'eau désaérée et/ou d'anhydride carbonique gazeux via le troisième dispositif de mélange (17, 24).

15. Appareil selon la revendication 14, caractérisé en ce que le circuit de régulation (25) est raccordé à un « circuit de régulation d'asservissement à réaction » en vue de comparer la valeur de consigne et la valeur réelle d'anhydride carbonique.

16. Appareil selon une des revendications 9 à 14, caractérisé en ce que, au deuxième dispositif de mélange (31), sont raccordés plusieurs réservoirs (32, 33, 34) pour des substances de base et/ou des substances aromatiques spécifiques aux boissons via des dispositifs d'alimentation pouvant être commandés (35e, 35f, 35g), tandis que ces dispositifs d'alimentation sont commandés au départ d'un ordinateur central (35).

17. Appareil selon une des revendications 9 à 16, caractérisé en ce que, entre le premier dispositif de mélange (7) et le deuxième dispositif (13) pour le dégazage de l'eau, on installe des filtres (12).

18. Appareil selon une des revendications 9 à 17, caractérisé en ce que les dispositifs prévus pour le dégazage de l'eau sont des dispositifs de dégazage sous vide comportant un récipient de dégazage (1, 13) dans le côté supérieur duquel débouche une conduite à dépression (3) raccordée à une pompe à vide (4) et qui comporte une admission (2, 14) et une évacuation (5, 15) pour le liquide à dégazer.

19. Appareil selon la revendication 18, caractérisé en ce que, devant l'admission du récipient de dégazage (1, 13), on installe un injecteur (41, 42) dont la tuyère de propulsion est raccordée à la conduite d'alimentation de liquide (2, 10a) et dont la chambre à dépression est raccordée à une source de gaz (41a, 42a).

20. Appareil selon la revendication 18 ou 19, caractérisé en ce que chaque dispositif prévu pour le dégazage sous vide de l'eau comporte un récipient de dégazage (1, 13) qui est conçu et disposé de telle sorte qu'il s'étende plus en largeur qu'en hauteur.

21. Appareil selon une des revendications 9 à 20, caractérisé en ce que le deuxième dispositif de mélange (31) peut être raccordé directement à l'évacuation (5) du premier dispositif (1) prévu pour le dégazage de l'eau.

22. Appareil selon une des revendications 9 à 21, caractérisé en ce que, entre le premier dispositif de mélange (7) et le deuxième dispositif (13) pour le dégazage de l'eau, on installe un tronçon de conduite (11) à courbures multiples présentant partout une déclivité.

23. Appareil selon une des revendications 16 à 22, caractérisé en ce que les réservoirs (32, 33, 34) prévus pour les substances de base et/ou les substances aromatiques spécifiques aux boissons sont raccordés, via les dispositifs d'alimentation pouvant être commandés (35e, 35f, 35g), à un prémélangeur qui est raccordé au deuxième dispositif de mélange (31).

# FIG.1

FIG.2